# EUROPÄISCHE PATENTSCHRIFT

(11) **EP 3 180 135 B1**
(45) Veröffentlichungstag und Bekanntmachung des Hinweises auf die Patenterteilung: **18.03.2020**
(21) Anmeldenummer: 15739531.0
(22) Anmeldetag: 26.06.2015
(51) Int. Cl.: B07C 5/342, H04N 13/243, H04N 13/254, G01N 21/90, G01N 21/88, G06T 7/00, B07C 5/34

(54) **OPTISCHES INSPEKTIONSVERFAHREN UND OPTISCHE INSPEKTIONSVORRICHTUNG FÜR BEHÄLTER**
OPTICAL INSPECTION METHOD AND OPTICAL INSPECTION DEVICE FOR CONTAINERS
PROCÉDÉ D'INSPECTION OPTIQUE ET DISPOSITIF D'INSPECTION OPTIQUE DE RÉCIPIENTS

(30) Priorität: 14.08.2014 DE 102014216188
(43) Veröffentlichungstag der Anmeldung: 21.06.2017
(73) Patentinhaber: Krones AG, 93073 Neutraubling (DE)
(72) Erfinder: Niedermeier, Anton, 93073 Neutraubling (DE)
(74) Vertreter: Grünecker Patent- und Rechtsanwälte PartG mbB
(86) Internationale Anmeldenummer: PCT/EP2015/064521
(87) Internationale Veröffentlichungsnummer: WO 2016/023668

(56) Entgegenhaltungen:
- EP-A1- 2 623 962
- WO-A2-2006/011803
- DE-A1-102007 009 769
- DE-A1-102008 025 658
- DE-A1-102009 011 270
- DE-A1-102011 004 584
- DE-B3-102008 063 076
- FR-A1- 2 991 052
- JP-A- 2013 134 099
- US-A- 4 376 951
- HUI-MIN MA ET AL: "A glass bottle defect detection system without touching", MACHINE LEARNING AND CYBERNETICS, 2002. PROCEEDINGS. 2002 INTERNATIONA L CONFERENCE ON NOV. 4-5, 2002, PISCATAWAY, NJ, USA,IEEE, Bd. 2, 4. November 2002 (2002-11-04), Seiten 628-632, XP010630279, ISBN: 978-0-7803-7508-6

## Beschreibung

Die Erfindung betrifft ein Verfahren und eine Vorrichtung zur optischen Inspektion für Behälter mit den Merkmalen der Oberbegriffe von Anspruch 1 bzw. 9.

Beispielsweise ist aus der DE 10 2009 011 270 A1 ein Durchlichtinspektionsverfahren bekannt, bei dem dieselbe Inspektionszone einer Behälterwandung mit zwei Kameras aus zwei unterschiedlichen Blickrichtungen mit einem überlappenden Sichtfeld aufgenommen wird. Die beiden Kamerabilder werden dann bei der Bildverarbeitung entzerrt und im Überlappbereich zur Überdeckung gebracht wird. Dadurch können übereinstimmende Bildinformationen von Störinformationen getrennt werden.

Ferner ist aus der WO 2006/011803 A2 ein Verfahren zur Erkennung von Fremdkörpern in Behältern bekannt, bei dem der Behälter von einer Lichtquelle beleuchtet und mit mehreren Kameras aus unterschiedlichen Blickrichtungen erfasst wird. Durch eine Korrelation der Information aus mehreren unterschiedlichen Kamerabildern kann die dreidimensionale Position eines Fremdkörpers mittels stereoskopischer Techniken rekonstruiert werden.

Nachteilig bei den bekannten Verfahren ist es, dass zur Inspektion aller Inspektionszonen am Behälter entsprechend viele Aufnahmen mit überlappenden Bildbereichen notwendig sind und dadurch der Inspektionsaufwand besonders hoch ist.

Des Weiteren ist aus der DE 10 2008 063 076 B3 eine Inspektionsvorrichtung zur optischen Prüfung von Flaschen bekannt, bei dem mit einem Spiegelkabinett das Sichtfeld einer Kamera aufgeteilt wird, so dass der Behälter gleichzeitig aus mehreren Blickrichtungen aufgenommen werden kann.

Die FR 2 991 052 A beschreibt eine Inspektionsvorrichtung, bei dem ein Behälter mit mehreren Kameras abgebildet wird und die aufgenommenen Bilder verkettet werden um dann bestimmte sichtbare Strukturen aufzufinden. Die JP 2013 134099 A offenbart eine Inspektionsvorrichtung, bei der Flaschen mit einem Leuchtkasten durchleuchtet und mit einer Kamera aus einem schräg nach unten auf die Seitenwand und den Boden gerichteten Winkel aufgenommen werden.

Die EP 2 623 692 A offenbart eine Inspektionsvorrichtung und ein Inspektionsverfahren, bei dem die Glasflaschen mit mehreren Beleuchtungseinheiten beleuchtet und mit wenigstens einer Kamera erfasst werden. Um das Licht der unterschiedlichen Beleuchtungseinheiten bei der Bildauswertung zu unterscheiden, wird eine gepulste Beleuchtung genutzt, die mit der Bilderfassung in der Kamera synchronisiert ist.

Aufgabe der vorliegenden Erfindung ist es, ein optisches Inspektionsverfahren für Behälter bereitzustellen, das effizienter arbeitet und dadurch weniger aufwändig ist.

Diese Aufgabe wird bei einem optischen Inspektionsverfahren für Behälter mit den Merkmalen des Oberbegriffs von Anspruch 1 mit den Merkmalen des kennzeichnenden Teils gelöst, gemäß dem in einem zweiten Bildauswertungsschritt ein einzelnes der zwei Kamerabilder ausgewertet wird, wobei zunächst die erste Bildinformation ausgeschlossen und dann eine zweite Bildinformation einer zweiten Inspektionszone des Behälters ermittelt wird.

Dadurch, dass die zuvor bei der stereoskopischen Bildauswertung ermittelte erste Bildinformation beim zweiten Bildauswertungsschritt ausgeschlossen wird, können die entsprechenden Bildstellen bei der weiteren Auswertung nicht mehr fehlinterpretiert werden. Des Weiteren ist durch die stereoskopische Zuordnung im ersten Bildauswertungsschritt bekannt, dass die erste Bildinformation örtlich in der ersten Inspektionszone liegen muss. Folglich kann zusätzlich beim zweiten Bildauswertungsschritt in der Auswertung mit einbezogen werden, dass die verbleibenden Bildobjekte außerhalb der ersten Inspektionszone liegen müssen. Dadurch kann die zweite Bildinformation zuverlässiger ermittelt werden, ohne dazu weitere überlappende Kamerabilder aufnehmen zu müssen, wodurch das Verfahren besonders effizient ist.

Das optische Inspektionsverfahren kann in einer Behälterherstellungs- und/oder Getränkeverarbeitungsanlage durchgeführt werden. Das optische Inspektionsverfahren kann nach der Herstellung des Behälters, nach der Reinigung eines neuen oder wiederverwerteten Behälters, vor und/oder nach einer Abfüllanlage eingesetzt werden. Die Behälterherstellungsanlage kann beispielsweise eine Streckblasmaschine für PET-Flaschen sein. Die Getränkeverarbeitungsanlage kann einen Rinser, einen Füller, einen Verschliesser, einen Etikettierer und/oder eine Verpackungsmaschine umfassen. Das optische Inspektionsverfahren kann mit einer optischen Inspektionsvorrichtung durchgeführt werden. Das optische Inspektionsverfahren kann ein Durchlicht-, Dunkelfeld- und/oder ein Auflichtverfahren umfassen. Dunkelfeldverfahren kann dabei bedeuten, dass der Behälter aus einer zur Blickrichtung der Kamera schrägen Beleuchtungsrichtung beleuchtet wird, wobei die Kamera die Lichtaustrittsfläche der Beleuchtungseinrichtung nicht direkt erfasst. Dadurch wird das Licht beispielsweise an Defekten derart umgelenkt, dass es in die Kamera gelangt. Folglich erscheinen die Defekte im Kamerabild heller als die Umgebung.

Die Beleuchtungseinrichtung kann eine Lichtquelle und/oder einen Streukörper umfassen. Vorzugsweise kann die Beleuchtungseinrichtung eine großflächige Lichtaustrittsscheibe umfassen, die größer als der Behälterumriss des zu inspizierenden Behälters in der Seitenansicht ist. Die Lichtaustrittsfläche kann eine Streu- oder Milchglasscheibe sein. Die Lichtquelle kann eine Leuchtstoffröhre, eine Glühbirne und/oder eine LED umfassen. Die Beleuchtungseinrichtung kann als Durchlicht-, Dunkelfeld- und/oder Auflichtbeleuchtungseinrichtung ausgebildet sein. Dunkelfeldbeleuchtungseinrichtung kann hier bedeuten, dass die Einrichtung Licht axial zur Behälterachse auf die Behältermündung und/oder den Behälterboden abstrahlt und der Behälter wenigsten teilweise mit Blickrichtung senkrecht auf die Behälterachse inspiziert wird.

Die Behälter können dafür vorgesehen sein, Getränke, Hygieneartikel, Pasten, chemische, biologische und/oder pharmazeutische Produkte aufzunehmen. Die Behälter können Kunststoffflaschen, Glasflaschen, Dosen und/oder Tuben sein. Bei den Kunststoffbehältern kann es sich im speziellen um PET-, HD-PE- oder PP- Behälter bzw. -Flaschen handeln. Ebenso kann es sich um Behälter aus einem biologisch abbaubaren Material handeln. Die Behälter können leer bzw. teilweise oder vollständig mit einem Produkt gefüllt sein.

Dass "ein Behälter wenigstens teilweise mit Licht einer Beleuchtungseinrichtung beleuchtet und/oder durchleuchtet wird" kann hier bedeuten, dass lediglich ein Teilbereich des Behälters mit dem optischen Inspektionsverfahren inspiziert wird. Hierbei kann es sich um die Behältermündung, die Seitenwand und/oder den Behälterboden handeln. "Durchleuchten" kann hier bedeuten, dass der Behälter im Durchlicht bzw. im Dunkelfeld durchleuchtet wird. Durchleuchten kann aber auch bedeuten, dass der Behälter gegenüber der/den spektralen Wellenlängen durchsichtig, durchscheinend ist und eine andere Beleuchtungsart, z. B. eine Dunkelfeldbeleuchtung eingesetzt wird.

Die Kamera kann eine CMOS- oder CCD- Kamera sein. Ein Objektiv an der Kamera kann dazu vorgesehen sein, den Behälter auf einen Bildsensor der Kamera abzubilden. Die Kamera kann über eine Datenschnittstelle mit einer Maschinensteuerung und/oder einer Bildverarbeitungseinrichtung verbunden sein. Die Perspektive über das Objektiv kann ein entozentrisches, telezentrisches oder entozentrisches Verhalten haben.

Die Bildverarbeitungseinrichtung kann einen Mikroprozessor, einen Speicher, eine Anzeigeeinheit, eine Eingabetastatur, ein Zeigeinstrument und/oder eine Datenschnittstelle umfassen. Die Bildverarbeitungseinrichtung kann dazu ausgebildet sein, Kamerabilder mit Bildverarbeitungsalgorithmen zu analysieren.

Dass "ein Behälter wenigstens teilweise [...] von wenigstens einer Kamera aus unterschiedlichen Blickrichtungen jeweils als Kamerabild aufgenommen wird" kann hier bedeuten, dass der Behälter (bzw. ein Teilbereich davon) aus den unterschiedlichen Blickrichtungen jeweils mit einer separaten Kamera aufgenommen wird. Ebenso kann zur Aufnahme der unterschiedlichen Blickrichtungen ein Spiegelkabinett vor der Kamera angeordnet sein. In diesem Bezug kann jedes der Kamerabilder einer Blickrichtung des Spiegelkabinetts zugeordnet sein. Anders ausgedrückt wird in diesem Fall das mit dem Spiegelkabinett und einer Kamera aufgenommene Gesamtbild in mehrere Kamerabilder aufgeteilt, die jeweils einer Blickrichtung zugeordnet sind.

Eine Inspektionszone kann einem dreidimensionalen Raumbereich oder einem Abschnitt des Behälters entsprechen. Beispielsweise kann eine Inspektionszone der ganzen oder einem Abschnitt der Behälterseitenwand entsprechen. Ebenso ist denkbar, dass eine Inspektionszone der Behältermündung oder dem Behälterboden entspricht. Die einzelnen Inspektionszonen können sich jeweils nicht überlappen. Eine Inspektionszone kann in mehrere Einheiten unterteilt sein. Um die interessierte Bildinformation durch die Einteilung in einer ausreichenden Größe durch die Unterteilung nicht zu zerstören, kann eine entsprechende Überlappung der Unterteilungen vorgesehen sein.

Die Bildinformation kann Merkmale des Behälters, einer Verschmutzung, wenigstens eines Teils eines Etiketts, einer Materialprägung, eines Behälterdefekts, wie beispielsweise eines Risses, einer Behälterkenngröße und/oder eines Aufdrucks umfassen. Die Bildinformation kann insbesondere die Position, die Größe und/oder den Typ des Merkmals auf dem Behälter umfassen. Anders ausgedrückt kann die Bildinformation jede geeignete Information umfassen, die den Behälter, dessen Inhalt und/oder eine Verschmutzung am Behälter charakterisiert. Ferner kann die Bildinformation eine Information darüber enthalten, dass im Kamerabild keine Verschmutzungen am Behälter ermittelt wurden. Die Bildinformation kann mittels Bildverarbeitungsalgorithmen aus den Kamerabildern extrahierbar sein. Beispielsweise können die Bildverarbeitungsalgorithmen Filter wie beispielsweise einen Schwellwert-, Kanten- und/oder Kontrastfilter umfassen.

Die stereoskopische Zuordnung kann eine zweidimensionale Überlagerung der beiden Kamerabilder und optional eine perspektivische Entzerrung umfassen. Ebenso kann die stereoskopische Zuordnung hier bedeuten, dass 3D-Punkte am Behälter den jeweiligen Bildstellen der beiden Kameras zugeordnet werden. Durch die stereoskopische Zuordnung kann die dreidimensionale Lage des Merkmals am Behälter ermittelt werden. Die stereoskopische Zuordnung kann eine photogrammetrische Auswertung bzw. einen Triangulationsalgorithmus umfassen. Die Bildstellen können Pixel, Bildabschnitte oder dergleichen in den zwei Kamerabildern umfassen.

Dass beim "zweiten Bildauswertungsschritt ein einzelnes der zwei Kamerabilder ausgewertet wird", kann hier bedeuten, dass genau eines der zwei bei der stereoskopischen Zuordnung verwendeten Kamerabilder ausgewertet wird, ohne dabei das andere Kamerabild über die bereits ermittelte erste Bildinformation hinaus zu berücksichtigen. Beim zweiten Bildauswertungsschritt können Algorithmen bzw. Bildauswertungsverfahren eingesetzt werden, die lediglich Grau- und/oder Farbwerte des Kamerabilds und/oder Pixelpositionen verarbeiten.

Dass "die erste Bildinformation ausgeschlossen wird" kann hier bedeuten, dass die erste Bildinformation im Kamerabild gelöscht, markiert oder anderweitig geeignet beim zweiten Bildauswertungsschritt unberücksichtigt bleibt.

Denkbar ist hier, dass die erste Inspektionszone des Behälters der Behältervorderseite (in Blickrichtung der Kamera) zugeordnet ist und zunächst dort die erste Bildinformation durch die stereoskopische Zuordnung ermittelt wird und dann die zweite Inspektionszone der in Blickrichtung der dahinterliegenden Behälterrückseite zugeordnet wird. Die davorliegende erste Bildinformation kann nun zunächst vor der Auswertung der dahinterliegenden zweiten Bildinformation aus dem Kamerabild gelöscht werden. Folglich können also auch Bildinformationen ermittelt werden, die von der davorliegenden ersten Bildinformation zunächst verdeckt werden.

Bei dem optischen Inspektionsverfahren für Behälter kann in einem dritten Bildauswertungsschritt eines der Kamerabilder ausgewertet werden, wobei zunächst die zweite Bildinformation ausgeschlossen und dann eine dritte Bildinformation einer dritten Inspektionszone des Behälters ermittelt wird. Durch das iterative Ausschließen der ersten und zweiten Bildinformation ist es möglich, einen Behälterbereich zuverlässig zu inspizieren, der lediglich von einem Kamerabild erfasst wird, wobei insbesondere Bildinformationen ausgeschlossen werden, die hinter der dritten Inspektionszone liegen und durch die Transparenz des Behälters dennoch erfasst werden. Dass beim dritten Bildauswertungsschritt ausgewertete Kamerabild kann jedes der von der Kamera aufgenommenen Kamerabilder sein.

Dass "die zweite Bildinformation ausgeschlossen wird" kann hier bedeuten, dass die zweite Bildinformation im Kamerabild gelöscht, markiert oder anderweitig geeignet beim dritten Bildauswertungsschritt unberücksichtigt bleibt.

Der erste, zweite und/oder dritte Bildauswertungsschritt können entsprechend ihrer Nummerierung nacheinander durchgeführt werden.

Die zweite Inspektionszone kann in Blickrichtung des beim zweiten Bildauswertungsschritt verwendeten Kamerabildes hinter der ersten Inspektionszone und die dritte Inspektionszone kann in Blickrichtung des beim dritten Bildauswertungsschritt verwendeten Kamerabildes vor der zweiten Inspektionszone angeordnet sein. Wie zuvor dargelegt können dadurch besonders gut Bildinformationen ausgeschlossen werden, die hinter der dritten Inspektionszone liegen und die dadurch das Inspektionsergebnis verfälschen können.

Beim dritten Bildauswertungsschritt kann ein anderes Kamerabild ausgewertet werden als beim zweiten Bildauswertungsschritt. Beispielsweise können zunächst zwei Kamerabilder durch die stereoskopische Zuordnung ausgewertet werden und die Ermittlung von weiterer Bildinformation in einem weiteren Kamerabild einer dritten Blickrichtung verbessert werden.

Die dritte Inspektionszone kann lediglich durch das beim dritten Bildauswertungsschritt ausgewertete Kamerabild erfasst werden. Wie zuvor beschrieben, ist es dadurch möglich in einem Behälterbereich zuverlässiger zu inspizieren, der lediglich durch ein Kamerabild erfasst wird.

Die Bildinformation kann durch eine Abbildungsvorschrift der Kamera ermittelt werden, die Raumpunkte und Bildstellen miteinander korreliert. Eine derartige Abbildungsvorschrift kann einen 3D Punkt über eine Zentralprojektion durch eine Pupille des Kameraobjektivs auf eine Bildstelle des Kamerasensors abbilden, wobei bei der Zentralprojektion Ort und Größe des Kamerasensors und Objektivkenngrößen berücksichtigt werden. Die Objektivkenngrößen können eine Brennweite, eine Pupillenlage, eine Schnittweite und/oder Kenngrößen für die Objektivverzeichnung umfassen. Anders ausgedrückt umfasst die Abbildungsvorschrift eine Gleichung, mit der ein 3D-Punkt im Blickfeld der Kamera auf eine entsprechende Bildstelle des Kamerabilds abgebildet wird.

Die Inspektionszonen können jeweils unterschiedlichen Bereichen des Behälters zugeordnet sein. Durch die Zuordnung der Inspektionszonen und die Kenntnis der Behältergeometrie kann über Plausibilitätsprüfungen die Effizienz und Zuverlässigkeit des optischen Inspektionsverfahrens weiter erhöht werden.

Darüber hinaus stellt die Erfindung mit dem Anspruch 9 eine optische Inspektionsvorrichtung für Behälter bereit, mit einer Beleuchtungseinrichtung und wenigstens einer Kamera, die optional wenigstens teilweise auf eine Lichtaustrittsfläche der Beleuchtungseinrichtung gerichtet ist, und mit einer Bildverarbeitungseinrichtung, dadurch gekennzeichnet, dass die Bildverarbeitungseinrichtung zur Durchführung des optischen Inspektionsverfahrens nach wenigstens einem der Ansprüche 1-8 ausgebildet ist.

Dadurch ist es möglich, das zuvor beschriebene optische Inspektionsverfahren in der optischen Inspektionsvorrichtung auszuführen und damit, wie zuvor genauer im Einzelnen dargelegt, die Kamerabilder effizienter und zuverlässiger auszuwerten.

Die Bildverarbeitungseinrichtung kann einen Mikroprozessor, einen Speicher, eine Anzeigeeinheit, eine Eingabetastatur, ein Zeigeinstrument und/oder eine Datenschnittstelle, beispielsweise zur Kamera, umfassen. Die Bildverarbeitungseinrichtung kann in der Kamera angeordnet sein oder extern in einer Maschinensteuerung bzw. einem Computer. Die Bildverarbeitungseinrichtung kann ein Computer oder eine Maschinensteuerung sein.

Die optische Inspektionsvorrichtung kann in einer Behälterherstellungs- und/oder Getränkeverarbeitungsanlage angeordnet sein. Die Inspektionsvorrichtung kann einer Abfüllanlage zum Abfüllen eines Produkts in die Behälter vor- oder nachgeordnet sein. Die Inspektionsvorrichtung kann auch einer Streckblasmaschine für PET- Flaschen nachgeordnet sein. Die Inspektionsvorrichtung kann zwischen einer Streckblasmaschine und einer Abfüllmaschine angeordnet sein.

Ebenso kann die Inspektionsvorrichtung in einer Anlage zur Wiederverwertung von Behältern angeordnet sein.

Vor der Kamera kann ein Spiegelkabinett angeordnet sein, um mehrere Blickrichtungen auf einen Behälter in einem Kamerabild zu erfassen. Das Spiegelkabinett kann dazu ausgebildet sein, zwei oder mehr Blickrichtungen in einem Gesamtbild der Kamera jeweils als Kamerabild zu erfassen. Ein Kamerabild kann dabei einer Blickrichtung des Spiegelkabinetts zugeordnet sein. Das Spiegelkabinett kann dazu ausgebildet sein, genau drei Blickrichtungen auf einen Behälter mit einem Kamerabild zu erfassen.

Ferner kann die optische Inspektionsvorrichtung auch die zuvor in Bezug auf das Durchlichtsinspektionsverfahren beschriebenen Merkmale einzeln oder in beliebigen Kombinationen umfassen.

Darüber hinaus stellt die Erfindung mit dem Anspruch 11 ein Computerprogrammprodukt auf einem Datenträger bereit, das Maschinenbefehle für einen Mikroprozessor zur Durchführung des optischen Inspektionsverfahrens nach wenigstens einem der Ansprüche 1 - 8 umfasst. Die Maschinenbefehle können Befehle einer Programmiersprache, einer Metasprache und/oder einer Assemblersprache umfassen.

Der Datenträger kann ein Speichermodul, eine Festplatte, eine Diskette, eine CD, eine DVD, Blue Ray und/oder ein USB-Speicher sein.

Weitere Merkmale und Vorteile der Erfindung werden nachfolgend anhand der beispielhaften Figuren erläutert. Dabei zeigt:
- Fig. 1: eine Darstellung eines Ausführungsbeispiels einer optischen Inspektionsvorrichtung für Behälter bei der Durchführung des optischen Inspektionsverfahrens in einer seitlichen Ansicht; und
- Fig. 2: eine Darstellung eines weiteren Ausführungsbeispiels einer optischen Inspektionsvorrichtung für Behälter bei der Durchführung des optischen Inspektionsverfahrens in einer Draufsicht.

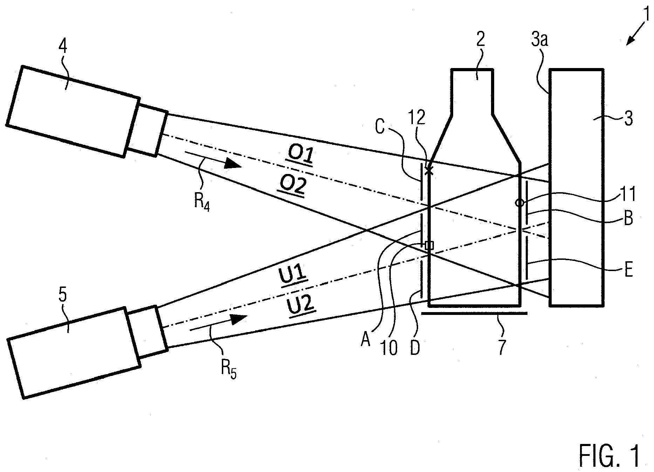

In Fig. 1 ist ein Ausführungsbeispiel einer optischen Inspektionsvorrichtung 1 für Behälter 2 bei der Durchführung des optischen Inspektionsverfahrens in einer seitlichen Ansicht dargestellt. Zu sehen ist, dass der Behälter 2 auf einem Transportband 7 zwischen einer Beleuchtungseinrichtung 3 und zwei Kameras 4 und 5 transportiert und dabei durchleuchtet wird. Die Transportrichtung verläuft in der Figur 1 senkrecht zur Zeichenebene. Die Beleuchtungseinrichtung 3 weist die Lichtaustrittsfläche 3a auf, die homogen verteiltes Licht abstrahlt. Dies gelangt durch den Behälter 2 hindurch zu den Kameras 4 und 5 und wird dort jeweils als Kamerabild aufgenommen. Denkbar ist jedoch auch, dass der Behälter 2 alternativ oder zusätzlich mittels wenigstens einer weiteren Beleuchtungseinrichtung im Auflicht und/oder Dunkelfeld inspiziert wird.

Zu sehen ist auch, dass jeweils unterschiedliche Bereiche des Behälters 2 den unterschiedlichen Inspektionszonen A - E zugeordnet sind. Der hier dargestellte Behälter 2 weist im Bereich der ersten Inspektionszone A ein Stück Schimmel 10, im Bereich der zweiten Inspektionszone B einen Riss 11 und im Bereich der dritten Inspektionszone C einen Etikettenrest 12 auf. Diese Objekte 10 - 12 sollen mit dem weiter unten beschriebenen optischen Inspektionsverfahren erkannt und daraufhin der Behälter 2 aussortiert werden.

Zu sehen ist auch, dass die erste Kamera 4 in Blickrichtung R₄ von schräg oben auf die Behälterseitenwand gerichtet ist. Das Bildfeld der Kamera 4 ist dabei grob in den Teil O1 und O2 geteilt. Der Teil O1 erfasst hierbei die Inspektionszonen C und B bzw. der Teil O2 die Inspektionszonen A und E. Ferner erfasst die zweite Kamera 5 aus der Blickrichtung R₅ den Behälter 2 von schräg unten. Auch hier ist das Bildfeld der zweiten Kamera 5 in den Teil U1 und U2 unterteilt, wobei der Teil U1 die Inspektionszonen A und B bzw. der Teil U2 die Inspektionszonen D und E erfasst. Es versteht sich, dass dies eine rein beispielshafte Einteilung ist, um das Ausführungsbeispiel zu erläutern. Denkbar ist jedoch auch jede beliebige andere Aufteilung der Bildfelder.

Das optische Inspektionsverfahren wird mit der optischen Inspektionsvorrichtung 1 wie folgt ausgeführt:
Zunächst wird mit den beiden Kameras 4 und 5 aus den beiden Blickrichtungen R₄ und R₅ jeweils ein Kamerabild aufgenommen. Dies erfolgt im Wesentlichen gleichzeitig. Dabei wird der Behälter 2 durch das aus der Lichtaustrittsfläche 3a austretende Licht der Beleuchtungseinrichtung 3 durchleuchtet, so dass in den Kamerabildern sowohl die Rück- als auch die Vorderseite des Behälters 2 sichtbar ist. Allerdings sind im Kamerabild der ersten Kamera 4 die Inspektionszonen C und B bzw. A und E überlagert. Des Weiteren sind im Kamerabild der Kamera 5 die Inspektionszonen A und B bzw. D und E überlagert.

Im ersten Bildauswertungsschritt werden nun Bildstellen der beiden Kamerabilder durch eine stereoskopische Zuordnung überlagert. Bei einer telezentrischen Abbildung wäre es beispielsweise möglich, die Bildstellen im Überlappbereich direkt zweidimensional übereinander zu legen. Demgegenüber können auch durch die Verwendung einer Abbildungsvorschrift in Kenntnis der Objektiv- bzw. Kamerakenngrößen die einzelnen Kamerabilder entzerrt und ebenfalls zweidimensional überlagert werden. Bei der Überlagerung der beiden Kamerabilder erscheint dann die Verschmutzung 10 an den erwarteten Bildstellen im Bereich der Inspektionszone A. Wäre die Verschmutzung im Inneren des Behälters oder auf der Rückseite, so würde sie im Überlappungsbereich der beiden Kamerabilder doppelt erscheinen und könnte so als nicht der ersten Inspektionszone A zugehörig erkannt werden. Die Verschmutzung 10 wird nun als erste Bildinformation mit Typ, Ort und Größe in einem Speicher abgelegt. Anders ausgedrückt ist die Verschmutzung 10 in beiden Teilbildfeldern O2 und U1 jeweils im unteren Bereich sichtbar.

Beim zweiten Bildauswertungsschritt wird nun lediglich das Kamerabild der zweiten Kamera 5 herangezogen. Im Teil U1 des Bildfeldes der zweiten Kamera 5 ist dabei sowohl die Verschmutzung 10 als auch der Riss 11 zu sehen. Im zweiten Teil U2 wird dagegen keine Verschmutzung erfasst. Da die Verschmutzung 10 bereits im ersten Bildauswertungsschritt erkannt wurde, wird deren erste Bildinformation zunächst aus dem Kamerabild gelöscht bzw. als erkannt markiert. Mit den bekannten Bildauswertungsalgorithmen wird nun das Kamerabild weiter ausgewertet. Beispielsweise wird unter Verwendung eines Schwellwerts der Riss 11 als Verdunklung detektiert. Da ferner bekannt ist, dass der Behälter 2 leer ist, kann der detektierte Riss 11 der zweiten Inspektionszone B zugeordnet werden. Typ, Ort und Größe des Risses 11 werden nun als zweite Bildinformation im Speicher abgelegt.

Zusätzlich oder alternativ ist denkbar, dass die Bildstellen des Risses 11 in den zwei Kamerabildern über eine stereoskopische Zuordnung bzw. über eine Abbildungsvorschrift der Kameras 4, 5 korreliert werden, da die zweite Inspektionszone B sowohl mit dem Teil O1 der ersten Kamera 4 als auch mit dem Teil U1 der zweiten Kamera 5 erfasst wird.

In einem dritten Bildauswertungsschritt wird dann allein das Kamerabild der ersten Kamera 4 hinsichtlich der Inspektionszone C ausgewertet, die ja ausschließlich mit dem Teil O1 erfasst wird. Demnach ist es nicht möglich, über eine stereoskopische Zuordnung von Bildstellen die Inspektion der Inspektionszone C zu bewerkstelligen. Zunächst wird, wie auch im zweiten Bildauswertungsschritt, die zweite Bildinformation (der Riss 11) von der weiteren Auswertung ausgeschlossen. Anschließend wird das Kamerabild mit an sich bekannten Bildverarbeitungsalgorithmen analysiert und der Etikettenrest 12 als Verdunklung erkannt. Auch hier wird Typ, Ort und Größe als dritte Bildinformation ermittelt und in einem Speicher abgelegt.

Insgesamt wird die Zuverlässigkeit der Erkennung von Fehlern im Bereich der dritten Inspektionszone C durch das Ausschließen der zuvor ermittelten Bildinformation erhöht und damit die Effizienz des Inspektionsverfahrens erhöht. Dadurch ist es bei dem optischen Inspektionsverfahren möglich, in nicht-überlappenden Bildbereichen die Inspektion zuverlässiger durchzuführen.

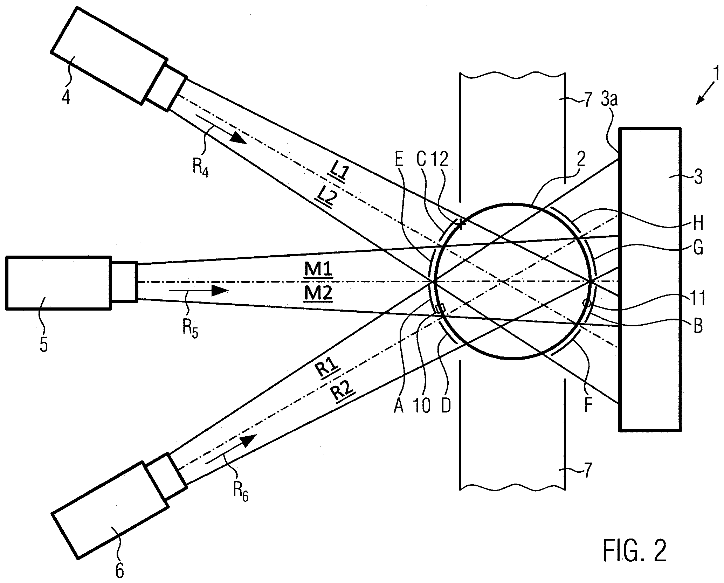

In der Fig. 2 ist ein weiteres Ausführungsbeispiel einer Inspektionsvorrichtung 1 für Behälter 2 bei der Durchführung des optischen Inspektionsverfahrens in einer Draufsicht dargestellt. Zu sehen ist, dass der Behälter 2 mit dem Transportband 7 zwischen der Beleuchtungseinrichtung 3 und den Kameras 4, 5 und 6 transportiert und durchleuchtet wird. Auch hier wird von der Beleuchtungseinrichtung 3 im Bereich der Lichtaustrittsfläche 3a Licht abgestrahlt, das den Behälter 2 durchleuchtet und von den Kameras 4 - 6 erfasst wird. Ferner ist denkbar, dass der Behälter 2 alternativ oder zusätzlich mittels wenigstens einer weiteren Beleuchtungseinrichtung im Auflicht und/oder Dunkelfeld inspiziert wird. Die in der Fig. 2 dargestellte optische Inspektionsvorrichtung 1 unterscheidet sich von der in der Fig. 1 dadurch, dass drei anstatt zwei Kameras den Behälter 2 erfassen. Dadurch kann umfänglich des Behälters 2 ein noch größerer Bereich inspiziert werden.

Dementsprechend ist der Behälter 2 auch in insgesamt acht Inspektionszonen A - H unterteilt. Die Kamera 4 erfasst in Blickrichtung R₄ mit dem ersten Teil des Bildfelds L1 die dritte Inspektionszone C und die zweite Inspektionszone B bzw. mit dem zweiten Teil L2 die Inspektionszonen E und F. Ferner erfasst die zweite Kamera 5 in der Blickrichtung R₅ mit dem ersten Teil M1 die Inspektionszone E und G bzw. mit dem zweiten Teil M2 die erste Inspektionszone A und die zweite Inspektionszone B. Desweiteren erfasst die dritte Kamera 6 in der Blickrichtung R₆ mit dem ersten Teil R1 die erste Inspektionszone A und die Inspektionszone H sowie mit dem zweiten Teil R2 die Inspektionszonen D und G.

Das optische Inspektionsverfahren wird bei der in der Fig. 2 gezeigten optischen Inspektionsvorrichtung 1 wie folgt eingesetzt:
Zunächst werden von den drei Kameras 4, 5 und 6 im Wesentlichen gleichzeitig aus den dargestellten Blickrichtungen R₄ - R₆ jeweils ein Kamerabild des Behälters 2 aufgenommen, wobei dieser mit der Beleuchtungseinrichtung 3 durchleuchtet wird.

Anschließend werden in einem ersten Bildauswertungsschritt die Kamerabilder der zweiten und dritten Kamera 5, 6 durch eine stereoskopische Zuordnung von Bildstellen ausgewertet. Dadurch ergibt sich im Bereich der ersten Inspektionszone A ein Überlapp, der mit beiden Kamerabildern erfasst wurde. Durch die stereoskopische Zuordnung erscheint in beiden Teilen M2 und R1 die Verschmutzung 10 in einem rechten Bereich. Anschließend werden Typ, Ort und Größe der Verschmutzung 10 als erste Bildinformation in einem Speicher abgelegt.

In einem zweiten Bildauswertungsschritt wird nun allein das Kamerabild der zweiten Kamera 5 ausgewertet. Hier ist ja bereits aus der ersten Bildinformation bekannt, dass sich dort im Teil M2 die Verschmutzung 10 befindet und die entsprechende Bildstelle wird daher von der weiteren Auswertung ausgeschlossen. Des Weiteren wird im selben Teil M2 des Kamerabilds ein Riss 11 auf der Behälterrückseite in der zweiten Inspektionszone B erfasst. Da die überlagerte Bildinformation der Verschmutzung 10 bereits gelöscht wurde, kann dieser besonders zuverlässig mit Bildverarbeitungsalgorithmen erkannt werden. Als zweite Bildinformation wird nun Typ, Ort und Größe des Risses 11 im Speicher abgelegt.

Im anschließenden dritten Bildauswertungsschritt wird allein das Kamerabild der Kamera 4 ausgewertet. Dieses erfasst im Teil L1 sowohl den bereits bekannten Riss 11 als auch zusätzlich einen Etikettenrest 12 im dritten Inspektionsbereich C. Da durch die zweite Bildinformation bereits der Riss 11 bekannt ist, wird dieser zunächst aus dem Kamerabild entfernt, wodurch sich der damit überlagerte Etikettenrest 12 leichter erkennen lässt. Zu sehen ist auch, dass die dritte Inspektionszone C lediglich durch die erste Kamera 4 erfasst wird. Folglich ist also in der Inspektionszone C keine stereoskopische Zuordnung möglich. Allerdings wird durch das beschriebene optische Inspektionsverfahren im dritten Bildauswertungsschritt eine höhere Erkennungssicherheit möglich, da im Kamerabild bereits der Riss 11 erkannt und so von der weiteren Verarbeitung ausgeschlossen wurde.

Es versteht sich, dass mittels des in Bezug auf die Figuren 1 und 2 beschriebenen optischen Inspektionsverfahrens auch Objekte im Bereich der Inspektionszonen D-H erkannt werden können. Darüber hinaus sind die optischen Inspektionsvorrichtungen 1 aus den Figuren 1 und 2 nicht auf die dargestellten Orientierungen der Behälter 2 beschränkt sondern sind zur Inspektion von Behältern 2 mit beliebiger Orientierung gegenüber der Vorrichtung ausgebildet.

Des Weiteren umfassen die optischen Inspektionsvorrichtungen der Fig. 1 und 2 auch eine hier nicht dargestellte Bildverarbeitungseinrichtung in einem Computer, wobei das optische Inspektionsverfahren als Computerprogrammprodukt (Software) in einem Speicher abgelegt und auf einem Mikroprozessor ausgeführt wird.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Optisches Inspektionsverfahren für Behälter (2),
wobei ein Behälter (2) wenigstens teilweise mit Licht einer Beleuchtungseinrichtung (3) beleuchtet und/oder durchleuchtet und von wenigstens einer Kamera (4 - 6) aus unterschiedlichen Blickrichtungen (R₄ - R₆) jeweils als Kamerabild aufgenommen wird, und
wobei in einem ersten Bildauswertungsschritt eine erste Bildinformation einer ersten Inspektionszone (A) des Behälters (2), beispielsweise eine Verschmutzung (10) auf einer Behältervorderseite, durch eine stereoskopische Zuordnung von Bildstellen aus wenigstens zwei der Kamerabilder ermittelt wird,
**dadurch gekennzeichnet, dass**
in einem zweiten Bildauswertungsschritt ein einzelnes der zwei Kamerabilder ausgewertet wird, wobei zunächst die erste Bildinformation ausgeschlossen und dann eine zweite Bildinformation einer zweiten Inspektionszone (B) des Behälters (2), beispielsweise ein Riss (11) einer Behälterrückseite, ermittelt wird.

2. Optisches Inspektionsverfahren nach Anspruch 1, wobei in einem dritten Bildauswertungsschritt eines der Kamerabilder ausgewertet wird, wobei zunächst die zweite Bildinformation ausgeschlossen und dann eine dritte Bildinformation einer dritten Inspektionszone (C) des Behälters (2), beispielsweise ein Etikettenrest (12) an einem lediglich mit einem Kamerabild erfassten Behälterbereich, ermittelt wird.

3. Optisches Inspektionsverfahren nach Anspruch 2, wobei die zweite Inspektionszone (B) in Blickrichtung (R₅) des beim zweiten Bildauswertungsschritt verwendeten Kamerabildes hinter der ersten Inspektionszone (A) und die dritte Inspektionszone (C) in Blickrichtung (R₄) des beim dritten Bildauswertungsschritt verwendeten Kamerabildes vor der zweiten Inspektionszone (B) angeordnet ist.

4. Optisches Inspektionsverfahren nach Anspruch 2 oder 3, wobei beim dritten Bildauswertungsschritt ein anderes Kamerabild ausgewertet wird als beim zweiten Bildauswertungsschritt.

5. Optisches Inspektionsverfahren nach einem der Ansprüche 2 - 4, wobei die dritte Inspektionszone (C) lediglich durch das beim dritten Bildauswertungsschritt ausgewertete Kamerabild erfasst wird.

6. Optisches Inspektionsverfahren nach wenigstens einem der vorangegangenen Ansprüche, wobei sich die Inspektionszonen (A - C) jeweils nicht überlappen.

7. Optisches Inspektionsverfahren nach wenigstens einem der vorangegangenen Ansprüche, wobei die Bildinformation durch eine Abbildungsvorschrift der Kamera (4 - 6) ermittelt wird, die Raumpunkte und Bildstellen, beispielsweise über Objektivkenngrößen, miteinander korreliert.

8. Optisches Inspektionsverfahren nach wenigstens einem der vorangegangenen Ansprüche, wobei die Inspektionszonen (A - C) jeweils unterschiedlichen Bereichen des Behälters (2) zugeordnet sind.

9. Optische Inspektionsvorrichtung für Behälter (2) mit einer Beleuchtungseinrichtung (3) und wenigstens einer Kamera (4 - 6), die optional wenigstens teilweise auf eine Lichtaustrittsfläche der Beleuchtungseinrichtung (3) gerichtet ist, und mit einer Bildverarbeitungseinrichtung,
**dadurch gekennzeichnet, dass**
die Bildverarbeitungseinrichtung zur Durchführung des optischen Inspektionsverfahrens nach wenigstens einem der Ansprüche 1 - 8 ausgebildet ist.

10. Optische Inspektionsvorrichtung nach Anspruch 9, wobei vor der Kamera (4 - 6) ein Spiegelkabinett angeordnet ist, um mehrere Blickrichtungen auf einen Behälter (2) in einem Kamerabild zu erfassen.

11. Computerprogrammprodukt auf einem Datenträger, das Maschinenbefehle für einen Mikroprozessor zur Durchführung des optischen Inspektionsverfahrens nach wenigstens einem der Ansprüche 1 - 8 umfasst.

## Claims

1. Optical inspection method for containers (2),
wherein a container (2) is at least partly illuminated and/or transilluminated with light of an illuminating device (3) and captured from different viewing directions (R₄ - R₆) as a camera image in each case by means of at least one camera (4 - 6), and
wherein in a first image analysis step, first image information of a first inspection zone (A) of said container (2), for example a stain (10) on a container front face, is ascertained from at least two of said camera images by stereoscopically pairing image points,
**characterized in that**
in a second image analysis step, an individual camera image of said two camera images is analyzed, wherein said first image information is first excluded and second image information of a second inspection zone (B) of said container (2), for example a crack (11) of a container rear face, is then ascertained.

2. Optical inspection method according to claim 1, wherein one of said camera images can be analyzed in a third image analysis step, where said second image information is first excluded and then third image information of a third inspection zone (C) of said container (2) is ascertained, for example, a label residue (12) in a container region captured with only one camera image.

3. Optical inspection method according to claim 2, wherein said second inspection zone (B) is in the viewing direction (R₅) of said camera image used in said second image analysis step arranged behind said first inspection zone (A), and said third inspection zone (C) is in the viewing direction (R₄) of said camera image used in said third image analysis step arranged in front of said second inspection zone (B).

4. Optical inspection method according to claim 2 or 3, wherein in said third image analysis step, a different camera image is analyzed than in said second image analysis step.

5. Optical inspection method according to one of the claims 2-4, wherein said third inspection zone (C) is captured only by said camera image analyzed in said third image analysis step.

6. Optical inspection method according to at least one of the preceding claims, wherein said inspection zones (A-C) do not overlap each other.

7. Optical inspection method according to at least one of the preceding claims, wherein said image information is ascertained by an imaging rule of said camera (4 - 6) which correlates spatial points and image points with one another, for example, by way of lens parameters.

8. Optical inspection method according to at least one of the preceding claims, wherein said inspection zones (A-C) are each associated with different sections of said container (2).

9. Optical inspection device for containers (2) with an illuminating device (3) and at least one camera (4 - 6) which is optionally at least partly directed onto a light-emitting surface of said illuminating device (3), and with an image processing device,
**characterized in that**
said image processing device is configured to perform the optical inspection method according to at least one of the claims 1-8.

10. Optical inspection device according to claim 9, wherein a mirror cabinet is arranged in front of said camera (4 - 6) for capturing several viewing directions onto said container (2) in one camera image.

11. Computer program product on a data carrier comprising machine commands for a microprocessor for performing the optical inspection method according to at least one of the claims 1-8.

## Revendications

1. Procédé d'inspection optique des récipients (2),
dans lequel un récipient (2) est au moins partiellement éclairé et/ou éclairé par transparence avec la lumière d'un dispositif d'éclairage (3) et est enregistré par au moins une caméra (4 - 6) à partir de différentes directions de visée (R₄ - R₆) à chaque fois comme image de caméra, et
dans laquelle, dans une première étape d'évaluation d'image, les premières informations d'image d'une première zone d'inspection (A) du récipient (2), par exemple une contamination (10) sur la face avant du récipient, sont déterminées à partir d'au moins deux des images de la caméra par une attribution stéréoscopique de points d'image,
**caractérisé en ce que**
dans une deuxième étape d'évaluation d'image, une seule des deux images de caméra est évaluée, où d'abord la première information d'image est exclue et ensuite une deuxième information d'image d'une deuxième zone d'inspection (B) du récipient (2), par exemple une fissure (11) de la face arrière du récipient, est déterminée.

2. Procédé d'inspection optique selon la revendication 1, dans lequel, dans une troisième étape d'évaluation d'image, une des images de la caméra est évaluée, dans lequel d'abord la deuxième information d'image est exclue et ensuite une troisième information d'image d'une troisième zone d'inspection (C) du récipient (2), par exemple un résidu d'étiquette (12) sur une région du récipient détectée seulement avec une image de la caméra, est déterminée.

3. Procédé d'inspection optique selon la revendication 2, dans lequel la deuxième zone d'inspection (B) est disposée derrière la première zone d'inspection (A) dans la direction de visée (R5) de l'image de caméra utilisée dans la deuxième étape d'évaluation d'image et la troisième zone d'inspection (C) est disposée dans la direction de visée (R4) de l'image de caméra utilisée dans la troisième étape d'évaluation d'image devant la deuxième zone d'inspection (B).

4. Procédé d'inspection optique selon la revendication 2 ou 3, dans lequel une image de caméra différente est évaluée dans la troisième étape d'évaluation d'image que dans la deuxième étape d'évaluation d'image.

5. Procédé d'inspection optique selon l'une des revendications 2 à 4, dans laquelle la troisième zone d'inspection (C) n'est détectée que par l'image de la caméra évaluée lors de la troisième étape d'évaluation de l'image.

6. Procédé d'inspection optique selon au moins une des revendications précédentes, les zones d'inspection (A - C) ne se chevauchant pas dans chaque cas.

7. Procédé d'inspection optique selon au moins une des exigences précédentes, dans laquelle l'information d'image est déterminée par une spécification d'image de la caméra (4 - 6) qui met en corrélation des points spatiaux et des emplacements d'image les uns avec les autres, par exemple par le biais de paramètres de lentille.

8. Procédé d'inspection optique selon au moins une des revendications précédentes, dans laquelle les zones d'inspection (A - C) sont chacune affectées à des régions différentes du récipient (2).

9. Dispositif d'inspection optique pour récipients (2) avec un dispositif d'éclairage (3) et au moins une caméra (4 - 6), qui est éventuellement dirigée au moins partiellement sur une surface de sortie de la lumière du dispositif d'éclairage (3), et avec un dispositif de traitement d'images,
**caractérisé en ce que**
le dispositif de traitement d'images est adapté pour effectuer la méthode d'inspection optique selon au moins une des revendications 1 à 8.

10. Dispositif d'inspection optique selon la revendication 9, dans lequel une armoire de miroir est disposée devant la caméra (4 - 6) afin de détecter plusieurs directions de vue d'un récipient (2) dans une image de caméra.

11. Produit de programme informatique sur un support de données comprenant des instructions de machine pour un microprocesseur afin d'exécuter la méthode d'inspection optique selon au moins une des revendications 1-8.
